# EUROPÄISCHE PATENTANMELDUNG

(11) **EP 2 365 027 A1**
(43) Veröffentlichungstag der Anmeldung: **14.09.2011**
(21) Anmeldenummer: 10002413.2
(22) Anmeldetag: 09.03.2010
(51) Int. Cl.: C08J 7/12, F16L 9/127, F16L 11/12

(54) **Kunststoffrohr mit einer fluorierten Innen- und/oder Aussenoberfläche**

(71) Anmelder: HAKA.Gerodur AG, 9201 Gossau SG (CH)
(72) Erfinder: Lueker, Hartmut, 9201 Gossau (CH); Mayer, Peter, 8717 Benken (CH)
(74) Vertreter: Schaad, Balass, Menzl & Partner AG

(57) **Zusammenfassung**

Die vorliegende Erfindung betrifft ein Kunststoffrohr oder Kunststoffrohrabschnitt mit einer fluorierten Innen-und/oder Aussenoberfläche, sowie ein Verfahren zur Herstellung eines solchen Kunststoffrohrs oder Kunststoffrohrabschnitts. Solche Rohre lassen sich einfach herstellen, sind vielseitig einsetzbar und verhindern eine ungewollte Permeation von Gasen und Flüssigkeiten besonders effizient. Die erfindungsgemässen Kunststoffrohre eignen sich daher insbesondere für eine Verwendung als Sondenrohre für Erdwärmesonden.

## Beschreibung

Die vorliegende Erfindung betrifft ein Kunststoffrohr oder einen Kunststoffrohrabschnitt mit einer fluorierten Innen-und/oder Aussenoberfläche, ein Verfahren zu deren Herstellung sowie deren Verwendung in einer Erdwärmesonde.

Gattungsgemässe Rohre finden in vielerlei technischen Gebieten Verwendung. Denkbar ist beispielsweise die Verwendung als Teil einer Erdwärmesonde, zum Beispiel als Sondenrohr und/oder Sondenfuss.

Erdwärmesonden werden bekanntermassen zur Ausnutzung der Erdwärme als Wärmetauscher in den Boden eingesetzt. Ein flüssiger Wärmeträger wird von einem ersten Sondenkopf über ein Sondenzulaufrohr zu einem Sondenfuss geführt, dort umgelenkt und über ein Sondenrücklaufrohr zu einem zweiten Sondenkopf geführt. Die beiden Sondenköpfe sind typischerweise über ein Sammelzulaufrohr bzw. über ein Sammelrücklaufrohr an eine Wärmepumpe angeschlossen. Üblicherweise werden Sondenrohre aus Kunststoff verwendet.

In Analogie zu obiger Verwendung können gattungsgemässe Rohre zum Beispiel auch für Trinkwasser- oder Abwasserleitungen, für Gasleitungen oder im Heizungs- und Sanitärbereich eingesetzt werden.

Nebst dem für die genannten Verwendungsbereiche selbstverständlichen Erfordernis, ein ungewolltes Austreten des zu transportierenden Mediums zuverlässig zu verhindern, sollte das Rohr zusätzlich auch verhindern, dass Fremdstoffe von aussen eindringen und das Medium verunreinigen können. Eine solche Abdichtung gegen ein Eindringen von Fremdstoffen von aussen ist keineswegs nur für Trinkwasserleitungen wichtig: Neuere Untersuchungen in Zusammenhang mit konventionellen Erdwärmesonden haben ergeben, dass im Erdboden enthaltene Gase durch Permeation in die Sondenrohre hineingelangen und zu einer Schaumbildung im Wärmetauschermedium - typischerweise ein Wasser-Glykol-Gemisch - führen können, wodurch die Funktion der Erdwärmesonde beeinträchtigt wird.

Es ist daher eine Aufgabe der vorliegenden Erfindung, ein Rohr zur Verfügung zu stellen, das einfach hergestellt werden kann, das vielfältig einsetzbar ist und das eine Permeation von Gasen und Flüssigkeiten besonders effizient verhindert.

Die Aufgabe wird gelöst durch das Kunststoffrohr bzw. den Kunststoffrohrabschnitt gemäss Anspruch 1 und 16, das Verfahren gemäss Anspruch 9 und die Verwendungen gemäss den Ansprüchen 17, 19 und 20. Bevorzugte Ausführungsformen sind Gegenstand der abhängigen Ansprüche.

Die vorliegende Erfindung betrifft ein Kunststoffrohr oder einen Kunststoffrohrabschnitt, umfassend eine Rohrwand mit einer Innenoberfläche und einer Aussenoberfläche. Das erfindungsgemässe Kunststoffrohr respektive der erfindungsgemässe Kunststoffrohrabschnitt sind dadurch gekennzeichnet, dass die Innen- und/oder Aussenoberfläche fluoriert ist.

Die Rohrwand des erfindungsgemässen Kunststoffrohrs bzw. Kunststoffrohrabschnitts besteht aus Kunststoff, welcher wahlweise Additive, zum Beispiel Pigmente, Stabilisatoren oder Verstärkungsmittel, enthalten kann. Vorzugsweise handelt es sich dabei um ein Material, welches sich beispielsweise durch ein Extrusionsverfahren in die gewünschte Form bringen lässt, z. B. um einen thermoplastischen Kunststoff. Durch die Fluorierung der Innen- und/oder Aussenoberfläche des Rohrs bzw. Rohrabschnitts wird ein Teil der Makromoleküle des Kunststoffs fluoriert, d.h. es findet eine chemische Reaktion statt, bei welcher fluorsubstituierte Kunststoff-Makromoleküle entstehen.

Es hat sich gezeigt, dass Kunststoffrohre mit einer fluorierten Innen- und/oder Aussenoberfläche eine verbesserte Barrierefunktion aufweisen, insbesondere gegenüber Gasen und niedermolekularen Flüssigkeiten. Beispiele solcher Stoffe sind Kohlendioxid, Ammoniak, Methan oder Ethanol. Die erfindungsgemässen Rohre und Rohrabschnitte eignen sich daher besonders gut zum Leiten eines flüssigen oder gasförmigen Mediums: Dank der fluorierten Innen- und/oder Aussenoberfläche kann die Permeation durch die Rohrwand - sowohl von Medium nach aussen als auch von Fremd- oder gar Schadstoffen nach innen - minimiert werden. Zudem wird auch das Kunststoffrohr selbst geschützt, beispielsweise vor Öl, welches bekanntermassen ein Quellen des Kunststoffs, z. B. von Polyethylen, verursachen kann. Somit eignen sich die gattungsgemässen Rohre für eine Vielzahl von Anwendungen, bei welchen eine Permeationssperre wichtig ist. Mögliche Anwendungsgebiete sind zum Beispiel Erdwärmesonden, Wasserleitungen, insbesondere für Trink- oder Abwasser, Gasleitungen, Heizungs- oder Sanitäranlagen, Tankstellensanierungen oder landwirtschaftliche Produktionsanlagen.

Die Herstellung der erfindungsgemässen Rohre und Rohrabschnitte ist einfach und kostengünstig. Die Oberflächen-Fluorierung kann dabei nach einem gängigen Verfahren zur Fluorierung von Kunststoffoberflächen durchgeführt werden. Solche Verfahren sind beispielsweise in EP 1 609 815, WO 207/107261, WO 2007/107262 oder EP 1 865 017 beschrieben, deren diesbezügliche Offenbarung hiermit durch Verweis eingeschlossen wird. Typischerweise wird die Oberfläche dabei mit einem fluor(F₂)-haltigen Gas behandelt.

Die erfindungsgemässen Kunststoffrohre oder Kunststoffrohrabschnitte eignen sich besonders gut für eine Anwendung als Teile einer Erdwärmesonde. In einer bevorzugten Ausführungsform ist das Kunststoffrohr oder der Kunststoffrohrabschnitt somit ein Sondenrohr oder ein Sondenrohrabschnitt für eine Erdwärmesonde, insbesondere ein Zu- oder Rücklaufrohr oder ein Sondenfuss. Besonders bevorzugt ist es, dass alle Sondenrohrteile einer Erdwärmesonden, welche im Betriebszustand unterirdisch angeordnet sind, aus erfindungsgemässen Kunststoffrohrabschnitten gefertigt sind. Die Vorteile der erfindungsgemässen Kunststoffrohre oder Kunststoffrohrabschnitte können bei den Teilen einer Erdwärmesonde besonders gut ausgenützt werden: Die fluorierte Innen-und/oder Aussenoberfläche verhindert nicht nur ein Austreten des Wärmetauschermediums, sondern auch eine Permeation von Fremdstoffen, beispielsweise von Erdgas oder CO₂ aus dem Erdreich, durch die Rohrwand ins Innere des Sondenrohrs, welche zu einer Schaumbildung im Medium und dadurch zu einer Beeinträchtigung der Funktion der Erdwärmesonde führen könnten.

Alternativ lassen sich die Vorteile der erfindungsgemässen Kunststoffrohre und Kunststoffrohrabschnitte aber auch bei Trinkwasserleitungen, Gasleitungen, Abwasserleitungen, Heizungs- oder Sanitärrohren ausnutzen.

In einer bevorzugten Ausführungsform besteht die Rohrwand aus einem Polyolefin-Kunststoff. Polyolefin-Kunststoffe sind üblicherweise Thermoplaste und lassen sich daher besonders leicht in die gewünschte Form bringen, beispielsweise durch ein Extrusionsverfahren. Zudem lassen sich Polyolefin-Kunststoffe gut durch Fluorierung modifizieren, um verbesserte Dicht- und Stabilitätseigenschaften zu erreichen. Besonders bevorzugt ist es, dass die Rohrwand aus Polyethylen (PE), Polypropylen (PP), Polybuten (PB) oder vernetztem Polyethylen (PEX) besteht. Alternativ kann die Rohrwand aber auch aus einem Polyamid (PA), insbesondere aus Polyamid 12, bestehen. Diese Werkstoffe sind insbesondere für Erdwärmesondenrohre bestens geeignet.

Als Kunststoffmaterial für die Rohrwand eignet sich beispielsweise Polyethylen mit einer Dichte von 0.938 bis 0.960 g/cm³ und einem MFR/190/21.6 - d.h. einem Schmelzflussindex ("Melt Flow Rate") bei einer Prüftemperatur von 190 °C und einer Masse von 21.6 kg - von 5 bis 15, Polypropylen mit einer Dichte von 0.880 bis 0.920 g/cm³ und einem MFR/190/5 von 0.2 bis 0.5, Polybuten mit einer Dichte von 0.930 bis 0.940 g/cm³ und einem MFR/190/5 von 0.2 bis 0.5 oder vernetztes Polyethylen (beispielsweise erhältlich durch nachträgliche Strahlenvernetzung) mit einer Dichte von 0.940 bis 0.950 g/cm³ und einem MFR/190/21.6 von 7.5 bis 8.5.

In einer bevorzugten Ausführungsform besteht die Rohrwand des erfindungsgemässen Kunststoffrohrs oder Kunststoffrohrabschnitts aus einer einzigen Kunststoffschicht. Die Rohrwandstärke beträgt dabei typischerweise ca. 2 bis 15 mm, z.B. SDR 11. Durch den einschichtigen Aufbau lassen sich die Rohre bzw. Rohrteile besonders schnell, einfach und kostengünstig herstellen, beispielsweise durch Extrusion. Mehrschichtigen Rohren haben demgegenüber den Nachteil höherer Herstellungskosten und komplizierterer Verbindungstechnik. Zudem zeichnen sich einschichtige Kunststoffrohre durch eine verbesserte Wärmeleitfähigkeit aus, was insbesondere für eine Anwendung als Erdwärmesonde von grosser Wichtigkeit ist. So kann durch die erfindungsgemässen Kunststoffrohre der Gesamtwirkungsgrad der Erdwärmesonde verbessert werden.

Weiter ist es bevorzugt, dass sowohl die Innen- als auch die Aussenoberfläche des erfindungsgemässen Kunststoffrohrs bzw. Kunststoffrohrabschnitts fluoriert ist. Durch diese doppelte Fluorierung wird die Sperrfunktion des Rohrs nach innen und nach aussen optimiert.

Alternativ ist es aber auch möglich, dass nur eine der beiden Oberflächen fluoriert ist. In diesem Fall ist bevorzugt die Innenoberfläche fluoriert, da so allfällige Beschädigungen der fluorierten Schicht während Transport, Lagerung und Einbau des Rohrs verhindert werden können. Zudem können auch Probleme beim Verbinden von Rohrstücken, z. B. durch Schweissen, vermieden werden.

In einer weiteren bevorzugten Ausführungsform weist die Innen- und/oder Aussenoberfläche eine Polytetrafluorethylen- (PTFE-) artige Schicht auf. Eine solche "Schicht" wird durch die Fluorierung der Kunststoffoberfläche erzeugt und ist üblicherweise nur wenige Molekularschichten dick. Man geht davon aus, dass bei der Fluorierung im Bereich der Oberfläche einzelne Wasserstoffatome der Kunststoff-Polymere durch Fluoratome ersetzt werden. Dadurch entsteht an der Rohroberfläche PTFE oder ein PTFE-ähnliches Material, welche im Rahmen dieser Anmeldung als "PTFE-artige" Materialien zusammengefasst werden. Diese PTFE-artige Schicht dient als Permeationssperre für Gase und Flüssigkeiten und verleiht somit verbesserte Eigenschaften.

In einem weiteren Aspekt betrifft die vorliegende Erfindung ein Verfahren zur Herstellung eines Kunststoffrohrs oder Kunststoffrohrabschnitts. Dieses Kunststoffrohr bzw. dieser Kunststoffrohrabschnitt umfasst eine Rohrwand mit einer Innenoberfläche und einer Aussenoberfläche. Beim erfindungsgemässen Verfahren wird die Innen- und/oder Aussenoberfläche des Kunststoffrohrs oder des Kunststoffrohrabschnitts fluoriert.

Wie oben beschrieben, dient die Fluorierung des Kunststoffrohrs oder Kunststoffrohrabschnitts dazu, die Sperreigenschaften des Kunststoffs zu verbessern. So ist es dank der fluorierten Innen- und/oder Aussenoberfläche für eine gute Permeationssperre nicht mehr unbedingt nötig, das Rohr mit einer zusätzlichen Aluminiumschicht oder einer Schicht aus Ethylen-Vinylalkohol-Copolymer (EVOH) zu versehen, wie dies bisher der Fall war. Dadurch kann der Herstellungsprozess erheblich vereinfacht und die Herstellungskosten gesenkt werden.

Die Fluorierung der Kunststoffoberfläche kann nach einem aus dem Stand der Technik hinlänglich bekannten Verfahren durchgeführt werden (siehe z. B. EP 1 609 815, WO 207/107261, WO 2007/107262 oder EP 1 865 017). Typischerweise wird die Oberfläche dabei mit einem fluorhaltigen Gas, beispielsweise einem F₂/N₂-Gemisch, behandelt.

Gemäss einer bevorzugten Ausführungsform wird mittels des erfindungsgemässen Verfahrens ein Sondenrohr oder ein Teil eines Sondenrohrs für eine Erdwärmesonde hergestellt. Das erfindungsgemässe Verfahren erlaubt eine besonders einfache und kostensparende Herstellung von solchen Rohren, welche oft Längen von ca. 25 bis 450 m aufweisen. Erdwärmesondenrohre werden typischerweise aus thermoplastischen Werkstoffen hergestellt und weisen üblicherweise einen Rohraussendurchmesser von etwa 25 bis 63 mm auf, zum Beispiel von 25 mm, 32 mm, 40 mm oder von 50 mm. Je nach Anwendung kann das Rohr aber auch einen grösseren oder kleineren Aussendurchmesser haben. Die aus dem Stand der Technik bekannten thermoplastischen Werkstoffen für Erdwärmesondenrohre besitzen, sofern sie keine zusätzliche Sperrschicht aus Aluminium oder EVOH aufweisen, oft nur eine beschränkte Sperrfunktion für Gase, so dass Erdgas, CO₂ oder andere Gase aus dem Erdreich in die Erdwärmesonde eindringen zu einer Schaumbildung im Medium führen kann. Durch die erfindungsgemässe Fluorierung der Innen- und/oder Aussenoberfläche der Rohre können diese Mängel behoben werden.

Wie oben erwähnt, besteht die Rohrwand vorzugsweise aus einem Polyolefin-Kunststoff, insbesondere aus Polyethylen (PE), Polypropylen (PP), Polybuten (PB) oder vernetztem Polyethylen (PEX). Diese Werkstoffe sind insbesondere für Erdwärmesondenrohre bestens geeignet, wobei Polyethylen für diese Anwendung besonders bevorzugt ist. Beispiele für besonders bevorzugte Polyethylen-Werkstoffe sind PE 100 und PE 100 RC (vgl. Vornorm PAS 1075). Alternativ kann die Rohrwand aber auch aus Polyamid, insbesondere aus Polyamid 12, gefertigt sein.

Weiter ist es bevorzugt, dass bei der Fluorierung eine PTFE-artige Schicht auf der Innen- und/oder Aussenoberfläche des Kunststoffrohrs oder des Kunststoffrohrabschnitts gebildet wird. Im Rahmen dieser Anmeldung werden PTFE (Polytetrafluorethylen) und PTFE-ähnliche Materialien unter dem Begriff "PTFE-artig" zusammengefasst. Eine solche PTFE-artige Schicht entsteht, wenn bei der Fluorierung im äusseren Bereich der Oberfläche einzelne Wasserstoffatome der Kunststoff-Polymere durch Fluoratome ersetzt werden. Diese PTFE-artige Schicht dient als Permeationssperre für Gase und Flüssigkeiten und schützt das Kunststoffrohr zusätzlich vor potentiell schädlichen Stoffen, mit denen es in Kontakt kommen könnte.

In einer weiteren bevorzugten Ausführungsform wird die Innen- und/oder Aussenoberfläche des Kunststoffrohrs oder des Kunststoffrohrabschnitts zur Fluorierung mit einem fluorhaltigen Gas behandelt. Ein solches fluorhaltiges Gas kann beispielsweise ein Gemisch von Fluor und Stickstoff sein, welches wahlweise auch einen oder mehrere Stabilisatoren enthalten kann. Geeignete Fluorierungsparameter und bevorzugte Ausführungsformen können beispielsweise den Dokumenten EP 1 609 815, WO 207/107261, WO 2007/107262 und EP 1 865 017 entnommen werden.

Vorzugsweise wird das fluorhaltige Gas zur Fluorierung der Innenoberfläche durch das Kunststoffrohr oder den Kunststoffrohrabschnitt hindurchgeleitet. Besonders bevorzugt ist es, dass die Innenoberfläche des Kunststoffrohrs oder des Kunststoffrohrabschnitts im off-line Verfahren fluoriert wird. Ein off-line Verfahren ist ein diskontinuierliches Verfahren, bei welchem Herstellung und Fluorierung getrennt voneinander erfolgen. Dabei wird das Kunststoffrohr oder der Kunststoffrohrabschnitt typischerweise separat, beispielsweise in einer geschlossenen Kammer behandelt, und die Fluorierung ist unabhängig vom Herstellungsverfahren. Alternativ kann die Innenoberfläche aber auch im in-line Verfahren fluoriert werden. Als in-line Verfahren bezeichnet man ein kontinuierliches oder semikontinuierliches Verfahren, bei welchem die Fluorierung während des Herstellungsprozesses durchgeführt wird, beispielsweise im Rahmen einer Rohrextrusion. Beide Verfahren sind grosstechnisch einsetzbar und eignen sich daher für die industrielle Produktion von Kunststoffrohren und Kunststoffrohrabschnitten mit einer fluorierten Innen- und/oder Aussenoberfläche.

In einer bevorzugten Ausführungsform wird sowohl die Innen- als auch die Aussenoberfläche des Kunststoffrohrs oder des Kunststoffrohrabschnitts fluoriert. Dadurch wird die Sperrfunktion des Rohrs optimiert.

Alternativ wäre es aber auch möglich, dass nur die Aussenoberfläche des Kunststoffrohrs fluoriert wird. Dies geschieht vorzugsweise in einem off-line Verfahren in einer geschlossenen Kammer, wobei die Rohrenden verschlossen werden, so dass kein Fluor in den Innenraum des Rohrs eindringen kann.

Nebst dem oben beschriebenen Verfahren betrifft die vorliegende Erfindung auch ein nach dem erfindungsgemässen Verfahren erhältliches Kunststoffrohr oder einen nach dem erfindungsgemässen Verfahren erhältlichen Kunststoffrohrabschnitt.

Gemäss einem weiteren Aspekt betrifft die vorliegende Erfindung auch die Verwendung eines erfindungsgemässen Kunststoffrohrs oder Kunststoffrohrabschnitts als Sondenrohr oder Sondenrohrabschnitt einer Erdwärmesonde. Wie oben ausgeführt wurde, treten die Vorteile betreffend Einfachheit der Herstellung und verbesserte Sperrfunktion der erfindungsgemässen Rohre insbesondere bei der Anwendung im Rahmen von Erdwärmesonden zum Vorschein.

Bei einer Erdwärmesonde können auch andere Kunststoffteile mit einer fluorierten Innen- und/oder Aussenoberfläche verwendet werden, beispielsweise mittels Spritzguss hergestellte Formteile. Vorzugsweise worden diese in Kombination mit erfindungsgemässen Kunststoffrohren verwendet.

Alternativ sind die erfindungsgemässen Kunststoffrohr oder Kunststoffrohrabschnitte aber auch für Anwendungen als Heizungs- oder Sanitärrohre oder bei Abwasser- und Trinkwasserleitungen gut geeignet. Dabei wird das Eindringen von Fremdstoffen von aussen, die das Medium verunreinigen oder die Funktion der Rohre in anderer Weise beeinträchtigen könnten, zuverlässig vermieden. Der sichere "Transport" des zu leitenden Mediums und das Verhindern eines Austretens des Mediums wird durch die Oberflächenfluorierung nicht beeinträchtigt.

Insbesonderc eignen sich die erfindungsgemässen Kunststoffrohre und Kunststoffrohrabschnitte aufgrund ihrer verbesserten Sperreigenschaften gegenüber Gasen auch dazu, als Gasleitungen eingesetzt zu werden. So können zum Beispiel Kohlendioxid (CO₂), Ammoniak (NH₃), Sauerstoff (O₂) oder niedrige Kohlenwasserstoffe, wie etwa Methan, Ethan, Propan oder Butan, ohne übermässige Verluste durch die erfindungsgemässen Rohre geleitet werden. Auch für unter Druck stehende Gase - bis zu einem gewissen Maximaldruck — eignen sich die erfindungsgemässen Kunststoffrohre und Kunststoffrohrabschnitte.

Besonders bevorzugt ist daher die Verwendung eines erfindungsgemässen Kunststoffrohrs oder Kunststoffrohrabschnitts als Sondenrohr oder Sondenrohrabschnitt einer Erdwärmesonde, bei welcher ein leichtflüchtiges Wärmetauschermedium eingesetzt wird. Vorzugsweise wird ein Wärmetauschermedium eingesetzt, welches ausgewählt ist aus der Gruppe bestehend aus Kohlendioxid, Ammoniak, niedrigen Kohlenwasserstoffen und teilfluorierten Kohlenwasserstoffen. Aus ökologischen und wirtschaftlichen Gesichtspunkten besonders bevorzugt ist CO₂.

Dabei wird die "Erdwärmesonde" typischerweise als Wärmerohr ausgebildet, welches senkrecht in die Erde eingeführt wird. Bei einem Wärmerohr wird die Verdampfungswärme eines Stoffes, d.h. des oben beschriebenen Mediums - insbesondere von CO₂ - ausgenutzt. Dabei ist das CO₂ im unteren Bereich des Wärmerohrs flüssig und wird durch die Erdwärme verdampft. Im oberen Bereich wird dem CO₂ durch Kondensation Wärme entzogen und genutzt. Bei einer solchen Sonde ist für die Umwälzung des Mediums keine zusätzliche Hilfsenergie, wie z.B. eine Umwälzpumpe, nötig. So können sehr grosse Wärmemengen ohne zusätzliche Aggregate an die Erdoberfläche befördert werden. Zudem kann ein solches Wärmerohr als einzelne Leitung ausgebildet werden; eine Trennung in Zu- und Rücklaufrohr ist nicht unbedingt nötig.

Bisher war der Einsatz von solchen leichtflüchtigen Wärmetauschermedien eher schwierig, da die bekannten Sondenrohre aus Polyethylen keine ausreichende Sperrfähigkeit für diese Medien besitzen. Durch die erfindungsgemässen Kunststoffrohre und Kunststoffrohrabschnitte mit einer fluorierten innen- und/oder Aussenoberfläche kann die Nutzung von Kohlendioxid und ähnlichen Stoffen in Erdwärmesonden optimiert werden.

In einem weiteren Aspekt betrifft die vorliegende Erfindung daher auch die Verwendung einer PTFE-artigen Schicht auf der Innen- und/oder Aussenoberfläche eines Kunststoffrohrs als Diffusions-Sperrschicht für CO₂.

Alternativ ist es auch möglich, dass eine solche PTFE-artige Schicht bei einem mehrschichtigen Rohr zwischen zwei Schichten, insbesondere zwischen zwei Kunststoffschichten, angeordnet ist. So kann zum Beispiel die Innen-und/oder Aussenoberfläche eines Kunststoffrohrs fluoriert und anschliessend eine weitere Kunststoffschicht auf diese fluorierte Oberfläche aufgebracht werden.

Die vorliegende Erfindung soll anhand der Zeichnungen noch weiter verdeutlicht werden. Es zeigt rein schematisch:
- Figur 1: ein off-line Verfahren zur Fluorierung der Innenoberfläche eines Kunststoffrohrs;
- Figur 2: ein in-line Verfahren zur Fluorierung der Aussenoberfläche eines Kunststoffrohrs; und
- Figur 3: ein alternatives in-line Verfahren zur Fluorierung der Aussenoberfläche eines Kunststoffrohrs.

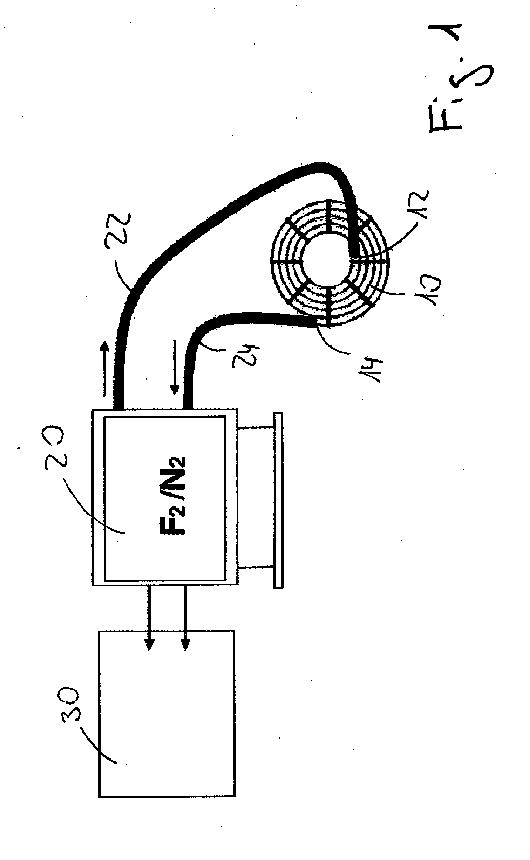

Figur 1 zeigt ein off-line Fluorierungsverfahren, bei dem die Innenseite eines Kunststoffrohrs 10, welches zu einem Rohr-Ringbund aufgerollt ist und beispielsweise aus Polyethylen besteht, mit einem fluorhaltigen Gas behandelt wird. Das Kunststoffrohr 10 wurde vorgängig, beispielsweise durch Extrusion, hergestellt; die Fluorierung ist somit unabhängig vom eigentlichen Formgebungsprozess. Das Kunststoffrohr 10 weist ein erstes Ende 12 und ein dem ersten Ende 12 gegenüberliegendes zweites Ende 14 auf. Zur Fluorierung der Innenoberfläche des Kunststoffrohrs 10 dient eine Fluorierungsanlage 20, in welcher ein fluorhaltiges Gasgemisch, z.B. ein Gemisch aus F₂ und N₂, generiert und auf die gewünschte Fluorierungstemperatur, z.B, ca. 50 bis 150 °C, gebracht wird. Die Fluorierungsanlage 20 weist einen Zuleitungsschlauch 22 und einen Ableitungsschlauch 24 auf, mithilfe derer das fluorhaltiges Gasgemisch durch das Kunststoffrohr 10 hindurch geleitet werden kann. Dazu wird der Zuleitungsschlauch 22 mit dem ersten Ende 12 und der Ableitungsschlauch 24 mit dem zweiten Ende 14 des Kunststoffrohrs 10 verbunden. Das Fluorgas-Gemisch kann nun von der Fluorierungsanlage 20 durch den Zuleitungsschlauch 22 zum Kunststoffrohr 10 und durch den Ableitungsschlauch 24 von dort wieder zur Fluorierungsanlage 20 geleitet werden. Die Fluorierungsdauer kann dabei über die Strömungsgeschwindigkeit des Gases geregelt werden. Die Fluorierungsanlage 20 ist weiter mit einer Adsorptionskammer 30 verbunden, in welcher überschüssiges Fluorgas adsorbiert und so eine Kontamination der Umgebung verhindert wird.

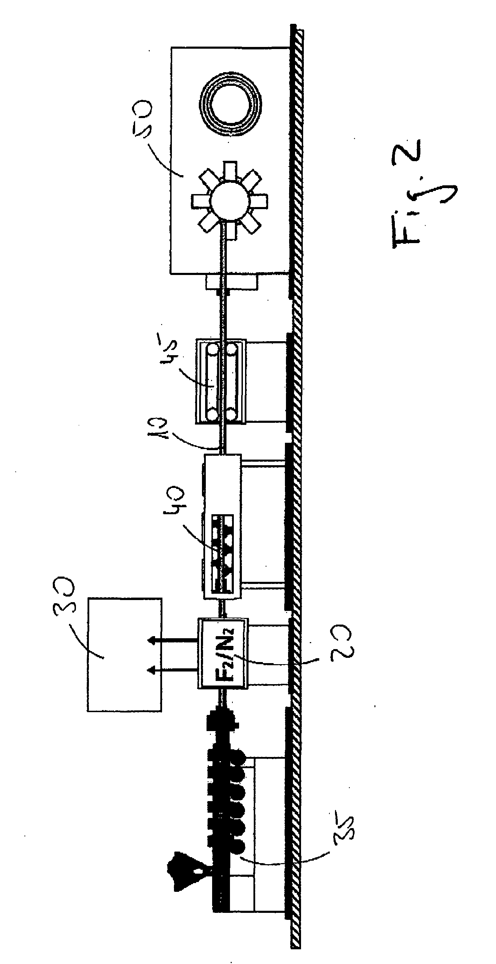

Figur 2 zeigt ein in-line Fluorierungsverfahren, bei dem die Aussenseite eines Kunststoffrohrs 10 mit einem fluorhaltigen Gase behandelt wird. Das Kunststoffrohr 10 wird dabei in einem handelsüblichen Extruder 35 in die gewünschte Form gebracht. Von da wird das Kunststoffrohr 10 in einem kontinuierlichen Prozess durch die Fluorierungsanlage 20 hindurchgeführt. In der Fluorierungsanlage 20 wird die Aussenoberfläche des Kunststoffrohrs 10 mit einem fluorhaltigen Gasgemisch, z.B. einem Gemisch aus F₂ und N₂, behandelt. Die Fluorierungsanlage 20 ist wiederum mit einer Adsorptionskammer 30 verbunden, in welcher überschüssiges Fluorgas adsorbiert und so eine Kontamination der Umgebung verhindert wird. Von der Fluorierungsanlage 20 wird das Kunststoffrohr 10 weiter durch eine Kalibrierung und Kühlstrecke 40 zur kontrollierten Kühlung und einen Abzug 45 zu einem Rohrwickler 50 geleitet. Im Rohrwickler 50 wird das Kunststoffrohr 10 mit fluorierter Aussenoberfläche zu einem Rohr-Ringbund aufgerollt.

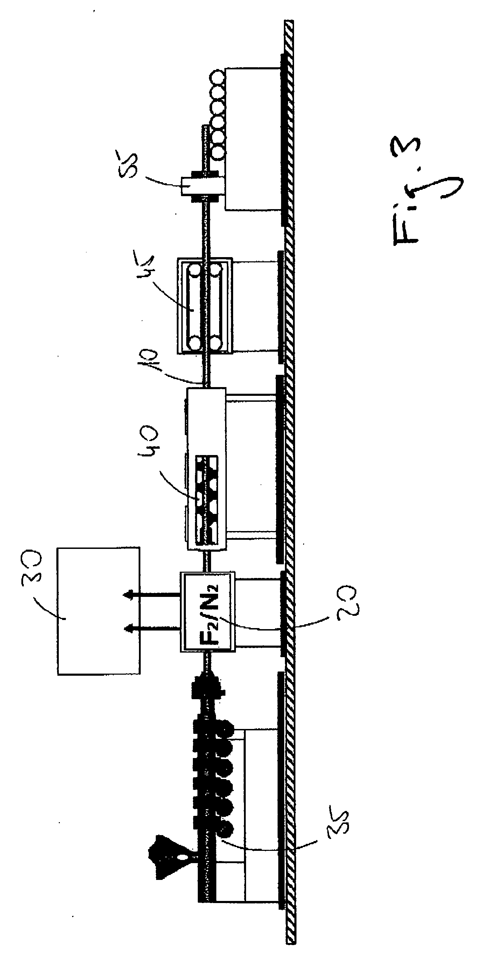

Figur 3 zeigt im Wesentliche dasselbe Verfahren wie Figur 2. Der einzige Unterschied besteht darin, dass das Kunststoffrohr 10 mit fluorierter Aussenoberfläche am Schluss einer Rohrsäge 55 zugeführt wird, welche das Kunststoffrohr 10 in mehrere Kunststoffrohrabschnitte einer gewünschten Länge zersägt.

## Patentansprüche

1. Kunststoffrohr oder Kunststoffrohrabschnitt, umfassend eine Rohrwand mit einer Innenoberfläche und einer Aussenoberfläche, **dadurch gekennzeichnet, dass** die Innen- und/oder Aussenoberfläche fluoriert ist.

2. Kunststoffrohr oder Kunststoffrohrabschnitt nach Anspruch 1, **dadurch gekennzeichnet, dass** das Kunststoffrohr oder der Kunststoffrohrabschnitt ein Sondenrohr oder ein Sondenrohrabschnitt für eine Erdwärmesonde ist.

3. Kunststoffrohr oder Kunststoffrohrabschnitt nach Anspruch 2, **dadurch gekennzeichnet, dass** der Sondenrohrabschnitt ein Sondenfuss für eine Erdwärmesonde ist.

4. Kunststoffrohr oder Kunststoffrohrabschnitt nach einem der Ansprüche 1 bis 3, **dadurch gekennzeichnet, dass** die Rohrwand aus einem Polyolefin-Kunststoff besteht, insbesondere aus Polyethylen, Polypropylen, Polybuten oder vernetztem Polyethylen.

5. Kunststoffrohr oder Kunststoffrohrabschnitt nach einem der Ansprüche 1 bis 3, **dadurch gekennzeichnet, dass** die Rohrwand aus einem Polyamid besteht, insbesondere aus Polyamid 12.

6. Kunststoffrohr oder Kunststoffrohrabschnitt nach einem der Ansprüche 1 bis 5, **dadurch gekennzeichnet, dass** die Rohrwand aus einer einzigen Kunststoffschicht besteht.

7. Kunststoffrohr oder Kunststoffrohrabschnitt nach einem der Ansprüche 1 bis 6, **dadurch gekennzeichnet, dass** sowohl die Innen- als auch die Aussenoberfläche fluoriert ist.

8. Kunststoffrohr oder Kunststoffrohrabschnitt nach einem der Ansprüche 1 bis 7, **dadurch gekennzeichnet, dass** die Innen- und/oder Aussenoberfläche eine PTFE-artige Schicht aufweist.

9. Verfahren zu Herstellung eines Kunststoffrohrs oder Kunststoffrohrabschnitts umfassend eine Rohrwand mit einer Innenoberfläche und einer Aussenoberfläche, **dadurch gekennzeichnet, dass** die Innen- und/oder Aussenoberfläche des Kunststoffrohrs oder des Kunststoffrohrabschnitts fluoriert wird.

10. Verfahren nach Anspruch 9, **dadurch gekennzeichnet, dass** ein Sondenrohr oder ein Teils eines Sondenrohrs für eine Erdwärmesonde hergestellt wird.

11. Verfahren nach Anspruch 9 oder 10, **dadurch gekennzeichnet, dass** die Rohrwand aus einem Polyolefin-Kunststoff, insbesondere aus Polyethylen, Polypropylen, Polybuten oder vernetztem Polyethylen, besteht.

12. Verfahren nach einem der Ansprüche 9 bis 11, **dadurch gekennzeichnet, dass** die Innen- und/oder Aussenoberfläche des Kunststoffrohrs oder des Kunststoffrohrabschnitts zur Fluorierung mit einem fluorhaltigen, wahlweise einen Stabilisatoren enthaltenden Gas behandelt wird.

13. Verfahren nach Anspruch 12, **dadurch gekennzeichnet, dass** das fluorhaltige Gas zur Fluorierung der Innenoberfläche durch das Kunststoffrohr oder den Kunststoffrohrabschnitt hindurchgeleitet wird.

14. Verfahren nach Anspruch 13, **dadurch gekennzeichnet, dass** die Innenoberfläche des Kunststoffrohrs oder des Kunststoffrohrabschnitts in einem off-line Verfahren fluoriert wird.

15. Verfahren nach einem der Ansprüche 9 bis 14, **dadurch gekennzeichnet, dass** sowohl die Innen- als auch die Aussenoberfläche des Kunststoffrohrs oder des Kunststoffrohrabschnitts fluoriert wird.

16. Kunststoffrohr oder Kunststoffrohrabschnitt, erhältlich nach dem Verfahren gemäss einem der Ansprüche 9 bis 15.

17. Verwendung eines Kunststoffrohrs oder Kunststoffrohrabschnitts nach einem der Ansprüche 1 bis 8 oder 16 als Sondenrohr oder Sondenrohrabschnitt einer Erdwärmesonde.

18. Verwendung nach Anspruch 17, **dadurch gekennzeichnet, dass** ein Wärmetauschermedium eingesetzt wird, welches ausgewählt ist aus der Gruppe bestehend aus Kohlendioxid, Ammoniak, niedrigen Kohlenwasserstoffen und teilfluorierten Kohlenwasserstoffen.

19. Verwendung eines Kunststoffrohrs oder Kunststoffrohrabschnitts nach einem der Ansprüche 1 bis 8 oder 16 als eine Trinkwasserleitung, eine Abwasserleitung, eine Gasleitung, ein Heizungsrohr oder ein Sanitärrohr.

20. Verwendung einer PTFE-artigen Schicht auf der Innen-und/oder Aussenoberfläche eines Kunststoffrohrs als Diffusions-Sperrschicht für CO₂.
